# EUROPÄISCHE PATENTSCHRIFT

(11) **EP 0 353 445 B1**
(45) Veröffentlichungstag und Bekanntmachung des Hinweises auf die Patenterteilung: **08.09.1993**
(21) Anmeldenummer: 89111350.8
(22) Anmeldetag: 22.06.1989
(51) Int. Cl.: F16C 33/66

(54) **Horizontalachsige ölgeschmierte Zylinderrollenlageranordnung**
Lubricated bearing with cylindrical rollers for a horizontal shaft
Palier lubrifié à rouleaux cylindriques pour axe horizontal

(30) Priorität: 02.08.1988 CH 2896/88
(43) Veröffentlichungstag der Anmeldung: 07.02.1990
(73) Patentinhaber: ASEA BROWN BOVERI AG, 5400 Baden (CH)
(72) Erfinder: Kurt, Gottfried, CH-8964 Rudolfstetten (CH)

(56) Entgegenhaltungen:
- FR-A- 1 453 586
- GB-A- 661 228
- GB-A- 749 949

## Beschreibung

### Technisches Gebiet

Die Erfindung bezieht sich auf eine horizontalachsige ölgeschmierte Rollenlageranordnung gemäß dem Oberbegriff des Patentanspruchs 1.

### Technologischer Hintergrund

Ölgeschmierte Zylinderrollenlager werden bei Lagerungen verwendet, deren Lageryennzahl K = nₘₐₓ mittlerer Lagerdurchmesser don Wert von ca. 0,55 x 10⁶ mm/s übersteigt.

Lagerungen mit Kennziffern K < 0,8·10⁶ mm/s werden dabei vorzugsweise mit aussenringgeführten Zylinderrollenlagern des Typs "NU" mit Ölbad- oder Spritzölschmierung ausgeführt (vgl. "Dubbels Taschenbuch für den Maschinenbau", Band I, Springer-Verlag Berlin/Heidelberg/New York, 12. Auflage 1966, S. 695 und Uebersicht auf S. 696, Bauform h).

Bei Lagerkennziffern K > 0,8·10⁶ mm/s führt diese Art Lager und Schmierung zu unzulässiger Lagererwärmung, weil das Schmieröl bauartbedingt im Aussenring nicht ständig erneuert werden kann. Durch Zufuhr noch so grosser Schmierölmengen kann die dort auftretende Wärme nicht abgeführt werden.

Gegenstand der gattungsgemäßen FR-A-1453586 ist eine horizontalachsige ölgeschmierte Kegelrollenlageranordnung mit einem feststehenden Lagerschild, an welchem der Aussenring des Rollenlagers befestigt ist, einer Welle, auf welcher der Innenring des Rollenlagers befestigt ist, ersten Mitteln zur Zufuhr von Schmieröl zum Lager und zweiten Mitteln zur Abfuhr des Schmieröls aus dem Lager zurück in ein Schmierölreservoir, wobei die ersten Mittel eine koaxial zum Lager angeordnete Ringölkammer, welche mit dem Lager über mindestens eine Leitung mit einer Ölfangvorrichtung verbunden ist, und wobei die Ölfangvorrichtung aus dem Schmiermittelreservoir gespeist ist. Die Dosierung der dem Lager zugeführten Ölmenge wird dabei über einen gasgefüllten Torus aus dehnbarem Material gesteuert, der in Abhängigkeit von der Schmieröltemperatur den Zufluss mehr oder weniger erweitert bzw. verengt.

### Kurze Darstellung der Erfindung

Es ist Aufgabe der Erfindung, eine ölgeschmierte Zylinderrollenlageranordnung anzugeben, bei welcher auch bei hohen Lagerkennzahlen die Lagererwärmung niedrig bleibt.

Die Lösung dieser Aufgabe erfolgt bei einer gattungsgemässen Rollenlageranordnung durch die in den Patentansprüchen gekennzeichneten Merkmale.

Durch die Erfindung ergibt sich eine beträchtliche Senkung der Lagererwärmung im Sinne einer Bedarfsschmierung. Die Erfindung eignet Sich insbesondere für sogenannte innenringgeführte Zylinderrollenlager, da hier die Gefahr des Auffüllens der Taschen zwischen den einzelnen Zylinderrollen nicht besteht und trotzdem ein ausreichender Schmieröldurchsatz gewährleistet ist.

### Kurze Beschreibung der Zeichnung

In der Zeichnung ist ein Ausführungsbeispiel einer erfindungsgemässen ölgeschmierten Zylinderrollenlageranordnung für die Rotorlagerung von Fahrmotoren dargestellt, anhand dessen die Erfinding und deren vorteilhafte Weiterbildung näher erläutert werden soll. Dabei zeigt
- Fig. 1: einen Längsschnitt durch die Lagerung;
- Fig. 2: einen leicht verkleinerten Querschnitt durch den Getriebekasten gemäss Fig. 1;
- Fig. 3: einen vergrösserten Schnitt durch die Ölfangvorrichtung gemäss Fig. 1.

### Detaillierte Beschreibung der Erfindung

Die Welle 1 eines Traktionsmotors mit eingesetztem Zapfenritzel 2 dreht sich in einem innenringgeführten Zylinderrollenlager, bestehend aus einem Innenring 3 mit U-förmigen Querschnitt und einem glattem Aussenring 4. Der Innenring 3 des Zylinderrollenlagers und ein Lagerhaltering 5 sind auf der sich drehenden Welle 1 aufgeschrumpft. Der Aussenring 4 des Lagers ist in dem feststehenden Lagerschild 6 angeordnet. Die Zylinderrollen 7 sind innenringeführt und in einem nicht dargestellten Käfig gehalten.

Zur Motorseite M hin verhindert eine dreistufige radiale Feinspaltdichtung ein axiales Austreten des Öles in den Motorraum. Die Feinspaltdichtung besteht im wesentlichen aus einem auf der Welle 1 befestigten mehrfach abgesetzten rotierenden Dichtungsteil 8, das mit einem entsprechend ausgebildeten, am Lagerschild 6 befestigten feststehenden Dichtungsteil 9 mit den Dichtspalten 10,11,12 zusammenwirkt. Über Ölrücklaufbohrungen 13,14 im feststehenden Dichtungsteil 9 bzw. im Lagerschild 6 fliesst überschüssiges Öl in den Getriebekasten 15.

Eine den feststehenden Dichtungsteil 9 und den Lagerschild 6 durchsetzende Entlüftungsbohrung 16 verbindet die Ringkammer 17 zwischen den Dichtspalten 10 und 11 mit dem getriebekastenseitigen Aussenraum A.

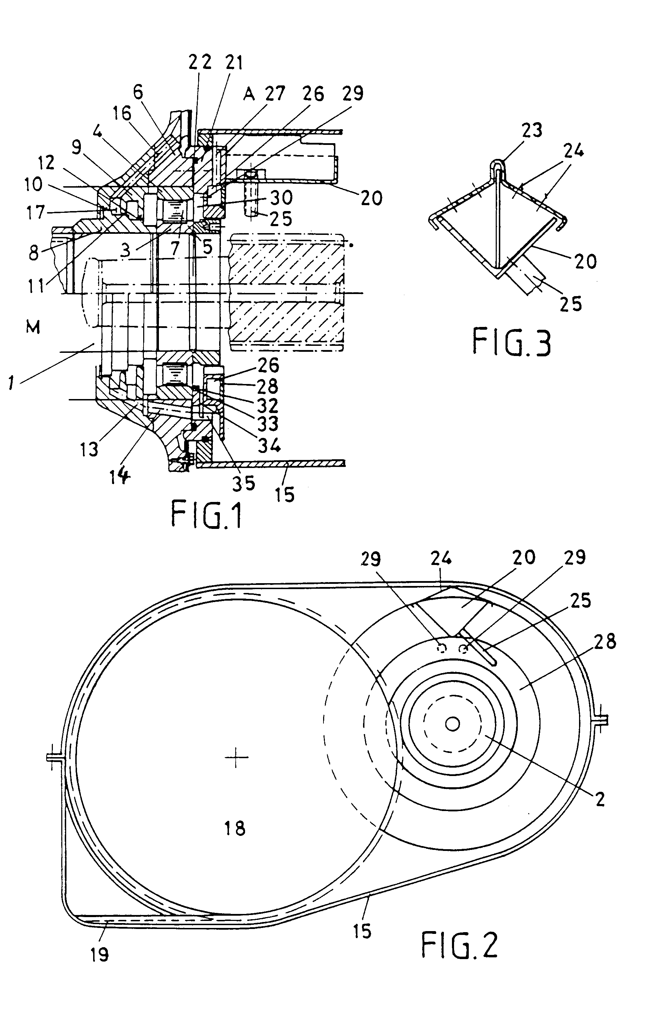

Der in Fig. 2 dargestellte Getriebekasten 15 entspricht hinsichtlich Aufbau und Funktion im wesentlichen der beispielsweise aus dem Buch von Sachs "Elektrische Triebfahrzeuge", 2. Auflage, Band 1, S. 366,367, Springer-Verlag Wien-New York 1973, bekannten Konstruktion. Hierbei wird das Grossrad 18 innerhalb des Kastens gekapselt und hierdurch erreicht, dass das Öl durch das Grossrad selbst an die Eingriffstelle mit dem Ritzel 2 geführt wird und die arbeitenden Zahnflanken dauernd und einwandfrei vom Öl gekühlt und bespült werden. Das vom Grossrad geförderte Öl erfüllt schon bei niedrigen Fahrgeschwindigkeiten den gesamten Getriebekasten mit einem Ölnebel, der sich an den Wänden des Kastens niederschlägt, seitlich abläuft und sich am Boden des Getriebekastens im Ölsumpf 19 wieder sammelt.

Ein Teil dieses Sprühöls wird nun erfindungsgemäss in einer oberhalb des Ritzels 2 angeordneten Ölfangvorrichtung 20 gesammelt. Diese Ölfangvorrichtung 20 ist an einer ringförmigen Platte 21, welche unter Zwischenschaltung einer Ringdichtung 22 am Lagerschild 6 befestigt ist, befestigt. Sie erstreckt sich über die gesamte Tiefe des Getriebekastens 15, weist umgekehrt-V-förmigen Querschnitt auf und ist mit einem Abdeckblech 23 versehen. Die Abdeckung weist eine Reihe von Löchern 24 auf. Durch Anzahl und Grösse der Löcher 24 im Abdeckblech 23 kann dabei die zu sammelnde Ölmenge dosiert werden. Am Boden der Ölfangvorrichtung führt eine Rohrleitung 25 zu einer Ringölkammer 26, die als Ringnut in der ringförmigen Platte 21 ausgeführt ist. Eine radial nach oben verlaufende Bohrung 27 in der ringförmigen Platte 21 dient als Entlüftungsbohrung für die Ringölkammer 26. Die Ringölkammer 26 ist ritzelseitig durch eine Ringplatte 28 verschlossen. Auf der gegenüberliegenden Seite sind im Nutgrund eine oder mehrere Überlaufbohrungen 29 vorgesehen.

Wie aus Fig. 2 gut zu erkennen ist, ist der Öleintritt via Leitung 25 gegenüber den Überlaufbohrungen 29 in Umfangsrichtung versetzt, und zwar derart, dass der Ölumlauf unterhalb des Ölaustritts (Überlaufbohrungen 29) aus der Ringölkammer 26 liegt. Somit können sich eventuell vorhandene Schmutzpartikel im Öl in der Ringölkammer 28 absetzen.

Das sich in der Ringölkammer 28 sammelnde Öl gelangt durch die Überlaufbohrungen 29 in einen Zwischenraum 30, welcher radial innen durch den Lagerhaltering 5, radial aussen durch eine zurückgenommene Ausdrehung in der ringförmigen Platte 21, ritzelseitig durch die Wandung der Ringölkammer 28 und motorseitig bzw. lagerseitig durch das Zylinderrollenlager begrenzt ist. Im Zwischenraum wird das Öl von einer Schleuderkante am sich drehenden Lagerhaltering zu einem Ölnebel zerstäubt. Eine geringe Ölmenge gelangt dadurch in das Zylinderrollenlager und sichert die Lagerschmierung. Überschüssiges Öl fliesst zunächst in eine Ölrückhaltevorrichtung 32, welche durch Einbringung einer sichelförmigen Nut in die radiale Innenfläche der ringförmigen Platte 21 oder als an dieser angeschweisster Steg 33 im unteren Bereich des Zwischenraumes 30 ausgebildet ist.

Nach Füllen der Ölrückhaltevorrichtung 32 gelangt das überschüssige Öl in einen Ablauf 34 und von dort aus in eine axiale Bohrung 35 in der ringförmigen Platte 21 und vereinigt sich dort mit dem Öl, das durch das Zylinderrollenlager, die Feinspaltdichtungen 10,11,12 und die Ölrücklaufbohrungen 13,14 geleitet wird.

In der Ölrückhaltevorrichtung 32 ist ständig eine kleine Ölmenge gespeichert, welche die Schmierung des Lagers nach längerer Stillstandszeit sicherstellt, bevor die eigentliche Ölförderung über Sprühöl aus dem Getriebekasten 15, Ölfangvorrichtung 20 und Ringölkammer 26 einsetzt.

Unterstützt wird die Ölförderung zum Zylinderrollenlager durch die Druckdifferenz zwischen Motorraum M und Aussenraum A, da im Motorraum im Betrieb systembedingt stets ein kleiner Unterdruck vorherrscht, welcher bewirkt, dass der Ölnebel im Zwischenraum 30 durch das Lager gefördert wird.

Die Erfindung eignet sich selbstverständlich für andere Anwendungsgebiete der Achsantriebe, die raschlaufende Motoren kombiniert mit Zahnradgetrieben erfordern.

## Patentansprüche

1. Horizontalachsige ölgeschmierte Rollenlageranordnung, insbesondere für die Lagerung von Fahrmotoren von Schienenfahrzeugen, mit einem feststehenden Lagerschild (6), an welchem der Aussenring (4) des Rollenlagers befestigt ist, einer Welle (1), auf welcher der Innenring (3) des Rollenlagers befestigt ist, ersten Mitteln (20,25,26,30) zur Zufuhr von Schmieröl zum Lager und zweiten Mitteln (13,14,34) zur Abfuhr des Schmieröls aus dem Lager zurück in ein Schmierölreservoir (15), wobei die ersten Mittel eine koaxial zum Lager angeordnete Ringölkammer (26), welche mit dem Lager über mindestens eine Leitung mit einer Ölfangvorrichtung (20) verbunden ist, und wobei die Ölfangvorrichtung (20) aus dem Schmiermittelreservoir (15) gespeist ist, dadurch gekennzeichnet, dass das Rollenlager ein Zylinderrollenlager ist, dass die Ringölkammer neben dem Lager angeordnet ist und durch eine Kammerwand (28) von diesem getrennt ist, und dass die Ringölkammer über mindestens eine Bohrung (29) in der dem Lager zugewandten Kammerwand mit dem Lager verbunden ist.

2. Lageranordnung nach Anspruch 1, dadurch gekennzeichnet, dass die Ölfangvorrichtung (20) im Innern eines Getriebekastens (15) angeordnet ist, der gleichzeitig als Schmierölreservoir dient, und dass die Ölfangvorrichtung (20) derart ausgebildet und angeordnet ist, um im Getriebe vorhandenes Öl aufzufangen.

3. Lageranordnung nach Anspruch 1 oder 2, dadurch gekennzeichnet, dass die Ölfangvorrichtung (20) Mittel (23,24) zur Dosierung der Menge des von ihr aufzufangenden Öls aufweist.

4. Lageranordnung nach einem der Ansprüche 1 bis 3, dadurch gekennzeichnet, dass die Zufuhr des Schmieröls zur Ringölkammer (26) auf einem Niveau erfolgt, das unterhalb des Ölaustritts aus der Ringölkammer (26) in das Lager liegt.

5. Lageranordnung nach einem der Ansprüche 1 bis 4, dadurch gekennzeichnet, dass zwischen der Ringölkammer (26) und dem Lager ein ringförmiger Zwischenraum (30) vorgesehen ist, welcher Mittel (31) zur Erzeugung eines Schmierölnebels zur Lagerschmierung enthält.

6. Lageranordnung nach Anspruch 5, dadurch gekennzeichnet, dass zur Sicherstellung der Lagerschmierung nach Stillstandszeiten im Zwischenraum (30) eine Ölrückhaltevorrichtung (32) zur Speicherung einer Restölmenge vorgesehen ist.

7. Lageranordnung nach einem der Ansprüche 1 bis 6, dadurch gekennzeichnet, dass das Lager ein innenringgeführtes Zylinderrollenlager mit im wesentlichen glattem Aussenring (4) ist.

8. Lageranordnung nach einem der Ansprüche 1 bis 7, dadurch gekennzeichnet, dass zumindest die Ringölkammer (26) in einem mit dem Lagerschild verbundenen, ansonsten jedoch selbständigen Bauteil angeordnet ist.

## Claims

1. Horizontal-axis oil-lubricated roller-bearing arrangement, especially for the mounting of travel motors of rail vehicles, with a stationary bearing plate (6), to which the outer ring (4) of the roller bearing is fastened, with a shaft (1) on which the inner ring (3) of the roller bearing is fastened, with first means (20, 25, 26, 30) for the feeding of lubricating oil to the bearing and with second means (13, 14, 34) for discharging the lubricating oil from the bearing back into a lubricating-oil reservoir (15), the first means being an annular oil chamber (26) which is arranged coaxially relative to the bearing and which is connected to the bearing via at least one line, to an oil-catcher device (20), and the oil-catcher device (20) being supplied from the lubricating-means reservoir (15), characterised in that the roller bearing is a cylindrical roller bearing, in that the annular oil chamber is arranged next to the bearing and is separated from the latter by a chamber wall (28), and in that the annular oil chamber is connected to the bearing via at least one bore (29) in the chamber wall facing the bearing.

2. Bearing arrangement according to Claim 1, characterised in that the oil-catcher device (20) is arranged inside a gearbox (15) which serves at the same time as a lubricating-oil reservoir, and in that the oil-catcher device (20) is so designed and arranged as to collect oil present in the gear.

3. Bearing arrangement according to Claim 1 or 2, characterised in that the oil-catcher device (20) has means (23, 24) for dosing the quantity of oil to be collected by it.

4. Bearing arrangement according to one of Claims 1 to 3, characterised in that the lubricating oil is fed to the annular oil chamber (26) at a level which is below the oil outflow from the annular oil chamber (26) into the bearing.

5. Bearing arrangement according to one of Claims 1 to 4, characterised in that between the annular oil chamber (26) and the bearing there is an annular interspace (30) which contains means (31) for generating a lubricating-oil mist for the bearing lubrication.

6. Bearing arrangement according to Claim 5, characterised in that, to ensure the bearing lubrication after standstill times, an oil retention device (32) for storing a quantity of residual oil is provided in the interspace (30).

7. Bearing arrangement according to one of Claims 1 to 6, characterised in that the bearing is an inner-ring-guided cylindrical roller bearing with an essentially smooth outer ring (4).

8. Bearing arrangement according to one of Claims 1 to 7, characterised in that at least the annular oil chamber (26) is arranged in a constructional part connected to the bearing plate, but otherwise independent.

## Revendications

1. Dispositif de palier à rouleaux à axe horizontal, graissé à l'huile, en particulier pour l'installation des paliers de moteurs de traction de véhicules sur rail, ayant une flasque fixe (6) à laquelle est fixé le chemin extérieur (4) du palier à rouleaux, un arbre (1) auquel est fixé le chemin intérieur (3) du palier à rouleaux, des premiers moyens (20, 25, 26, 30) d'apport d'huile de graissage au palier et des deuxièmes moyens (13, 14, 34) d'évacuation de l'huile de graissage du palier vers un réservoir d'huile de graissage (15), les premiers moyens consistant en une chambre à huile annulaire (26) disposée coaxialement au palier, et reliée au palier par au moins une conduite pourvue d'un dispositif de réception d'huile (20), et le dispositif de réception d'huile (20) étant alimenté par le réservoir de lubrifiant (15), caractérisé en ce que le palier à rouleaux est un palier à rouleaux cylindriques, en ce que la chambre à huile annulaire est disposée à côté du palier, et est séparée de celui-ci par une paroi de chambre (28), et en ce que la chambre à huile annulaire est reliée au palier par au moins un alésage (29) dans la paroi de la chambre tournée vers le palier.

2. Dispositif de palier selon la revendication 1, caractérisé en ce que le dispositif de réception d'huile (20) est disposé à l'intérieur d'une boîte d'engrenages (15), qui sert en même temps de réservoir d'huile de graissage, et en ce que le dispositif de réception d'huile (20) est conçu et disposé de façon à recevoir l'huile présente dans l'engrenage.

3. Dispositif de palier selon la revendication 1 ou 2, caractérisé en ce que le dispositif de réception d'huile (20) présente des moyens (23, 24) de dosage de la quantité d'huile qu'il doit recevoir.

4. Dispositif de palier selon l'une quelconque des revendications 1 à 3, caractérisé en ce que l'apport de l'huile de graissage à la chambre à huile annulaire (26) se produit à un niveau se trouvant en-dessous de la sortie d'huile de la chambre à huile annulaire (26) dans le palier.

5. Dispositif de palier selon l'une quelconque des revendications 1 à 4, caractérisé en ce qu'il est prévu, entre la chambre à huile annulaire (26) et le palier, un espace intermédiaire (30) annulaire, qui contient des moyens (31) de production d'un nuage d'huile de graissage pour le graissage du palier.

6. Dispositif de palier selon la revendication 5, caractérisé en ce que pour assurer le graissage du palier après des temps de repos, il est prévu dans l'espace intermédiaire (30) un dispositif de retenue de l'huile (32) pour l'accumulation d'une quantité résiduelle d'huile.

7. Dispositif de palier selon l'une quelconque des revendications 1 à 6, caractérisé en ce que le palier est un palier à rouleaux cylindriques guidé par un chemin intérieur avec un chemin extérieur (4) substantiellement lisse.

8. Dispositif de palier selon l'une quelconque des revendications 1 à 7, caractérisé en ce qu'au moins la chambre à huile annulaire (26) est disposée dans un composant relié à la flasque et cependant d'autre part indépendant.
